# EUROPÄISCHE PATENTANMELDUNG

(11) **EP 1 251 229 A2**
(43) Veröffentlichungstag der Anmeldung: **23.10.2002**
(21) Anmeldenummer: 02007788.9
(22) Anmeldetag: 06.04.2002
(51) Int. Cl.: E05F 15/20, E05F 15/16

(54) **Verfahren zur Beseitigung von Quietschgeräuschen im Betrieb von elektromotorisch angetriebenen Kraftfahrzeug-Fensterhebern**

(30) Priorität: 17.04.2001 DE 10118850
(71) Anmelder: ArvinMeritor GmbH, 63128 Dietzenbach (DE)
(72) Erfinder: Mersch, Gerhard, Dipl.-Ing., 30179 Hannover (DE)
(74) Vertreter: Oppermann, Ewald, Dipl.-Ing.

(57) **Zusammenfassung**

Vorgeschlagen wird ein Verfahren zur Beseitigung von Quietschgeräuschen, die im Betrieb eines durch einen Elektromotor angetriebenen Fensterhebers für Kraftfahrzeugfenster auftreten. Hierbei werden die Quietschgeräusche von einem System zur Auswertung akustischer Signale erfaßt. Dieses System erzeugt für die Dauer des Quietschgeräuschs ein Befehlssignal, das einer Fensterheber-Steuereinrichtung zugeführt wird. Diese ändert die Drehzahl des Elektromotors innerhalb festgelegter Grenzen, bis entweder das System zur Auswertung akustischer Signale kein Quietschgeräusch mehr erfaßt oder aber erkannt wird, daß Drehzahländerungen erfolglos sind. Das Verfahren ist insbesondere dann vorteilhaft, wenn im Kraftfahrzeug ein Sprachkontrollsystem vorhanden ist, welches als System zur Auswertung akustischer Signal verwendet werden kann.

## Beschreibung

Die Erfindung bezieht sich auf ein Verfahren zur Beseitigung von Quietschgeräuschen, die im Betrieb eines durch einen Elektromotor angetriebenen Fensterhebers für Kraftfahrzeuge auftreten.

Bei derartigen Fensterhebern kann insbesondere nach einiger Betriebszeit das Problem auftreten, daß die Fensterheber beim Öffnen und/oder Schließen von Fahrzeugfenstern Quietschgeräusche hervorrufen, die Fahrer und ggf. Mitfahrer als sehr störend empfinden. Die Ursachen der Quietschgeräusche sind bekannt. Sie entstehen durch Schwingungen, die durch Gleitbewegungen der Mitnehmer für die Fensterscheibe an Führungsschienen erzeugt werden. Die Charakteristik der Quietschgeräusche bezüglich Frequenzband und Geräuschpegel sind von Fahrzeug zu Fahrzeug verschieden und müssen im Laufe der Fahrzeugentwicklung ermittelt werden, ohne daß es dabei gelingt, die Geräusche zuverlässig durch rein konstruktive Maßnahmen zu beseitigen.

So ist für einen Zwei-Schienen-Fensterheber (DE 198 59 706 C2) der Seilheberbauweise, bei welchem zwei jeweils an einer Schiene verschiebbar gelagerte Mitnehmer über ein Verbindungselement starr miteinander gekoppelt sind, zur Vermeidung von Quietschgeräuschen vorgeschlagen worden, die zwei Mitnehmer mit der Fensterscheibe durch Klemmen, Verschrauben od.dgl. zu verbinden und das Verbindungselement mit jedem Mitnehmer an wenigstens zwei voneinander beabstandeten Fixierungspunkten zu koppeln. Hierdurch soll einem Verkippen der Mitnehmer an den Schienen entgegengewirkt werden, jedoch kann die Entstehung von Quietschgeräuschen auch durch diese rein konstruktiven Maßnahmen nicht sicher verhindert werden.

Bei einer bekannten Einrichtung (DE 43 31 790 A1) zur Vermeidung von selbsterregten Reibschwingungen zwischen zwei sich berührenden und relativ zueinander bewegten Körpern, beispielsweise von Quietschgeräuschen beim Ein- und Ausfahren von Pkw-Seitenscheiben, die durch anliegende Dichtungen gegenüber der Karosserie abgedichtet sind, soll einer der Körper, beispielsweise die als Hohlprofilleiste ausgebildete Dichtung, mit einem Schwingungsdämpfer oder -absorber mit einer modalen Zusatzdämpfung versehen werden. Auch diese Einrichtung kann durch Gleitbewegungen von Fensterscheiben-Mitnehmern an Führungsschienen von Fensterhebern entstehende Quietschgeräusche nicht beseitigen.

Der Erfindung liegt die Aufgabe zugrunde, ein Verfahren bereitzustellen, mit welchem derartige Quietschgeräusche wirksam beseitigt werden können.

Diese Aufgabe wird gemäß Anspruch 1 dadurch gelöst, daß die Quietschgeräusche von einem System zur Auswertung akustischer Signale erfaßt werden, welches für die Dauer des Quietschgeräuschs ein Befehlssignal erzeugt, das einer Fensterheber-Steuereinrichtung zugeführt wird, welche die Drehzahl des Elektromotors innerhalb festgelegter Grenzen ändert, bis das System zur Auswertung akustischer Signale kein Quietschgeräusch mehr erfaßt oder aber erkannt wird, daß Drehzahländerungen erfolglos sind. Diesem Verfahren liegt die Feststellung zugrunde, daß die im Betrieb von Fensterhebern auftretenden Quietschgeräusche von der Geschwindigkeit abhängig sind, mit der die Mitnehmer an den Führungsschienen gleiten.

Vorteilhafte Ausgestaltungen der Erfindung sind in den Unteransprüchen angegeben.

Vorzugsweise wird entsprechend Anspruch 2 ggf. ein im Kraftfahrzeug vorhandenes Sprachkontrollsystem als System zur Auswertung akustischer Signale verwendet. Dabei wird davon ausgegangen, daß schon jetzt und in Zukunft immer häufiger Sprachkontrollsysteme (Autotelefon, Telematik etc.) im Fahrzeug vorhanden sind. Ein solches Sprachkontrollsystem ist mit einem Mikrofon ausgestattet und wertet die akustischen Signale im Fahrzeuginneren aus. Aufgrund der während der Entwicklung ermittelten Charakteristik (Frequenzband und Geräuschpegel) eines Fensterheberquietschgeräuschs ist ein Sprachkontrollsystem in der Lage, ein auftretendes Geräusch als Fensterheberquietschgeräusch zu erkennen.

Ist das Geräusch als Fensterheberquietschgeräusch erfaßt, kann gemäß Anspruch 3 das daraufhin erzeugte Befehlssignal der Fensterheber-Steuereinrichtung vorteilhaft über das CAN (Controller Area Network)-System, falls vorhanden, zugeführt werden. Dabei wird die Information, daß ein Fensterheber quietscht, mittels des Komfort-CAN an alle Knoten des CAN-Netzwerks weitergeleitet.

Die Drehzahländerung des Elektromotors erfolgt entsprechend Anspruch 4 zweckmäßig durch Pulsweitenmodulations(PWM)-Signale. Dieses eröffnet, wie im Anspruch 5 angegeben, die vorteilhafte Möglichkeit, daß der Pulsweitenmodulationsstatus, der bei Aufhören des Quietschgeräuschs vorliegt, und die dabei vorhandene Position des Fahrzeugfensters gespeichert werden, und daß dieser Pulsweitenmodulationsstatus jedesmal, wenn das Fahrzeugfenster diese Position durchfährt, zur entsprechenden Drehzahlsteuerung des Elektromotors aus dem Speicher abgerufen wird.

Vorzugsweise erfolgt die Änderung der Drehzahl des Elektromotors entsprechend Anspruch 6 innerhalb der festgelegten Grenzen schrittweise.

Ein Ausführungsbeispiel der Erfindung wird nachfolgend anhand der Zeichnungen näher erläutert. Es zeigt:
- Fig. 1: eine Perspektivansicht eines Türmoduls mit Fensterheber,
- Fig. 2: ein Schema des Systems zur Auswertung akustischer Signale und der Fensterheber-Steuereinrichtung,
- Fig. 3: einen Ablaufplan des Verfahrens,
- Fig. 4: eine elektrische Schaltung zur Motorbestromung und
- Fig. 5: eine schematische Darstellung der Einrichtung zum Auslesen der Fensterheberposition.

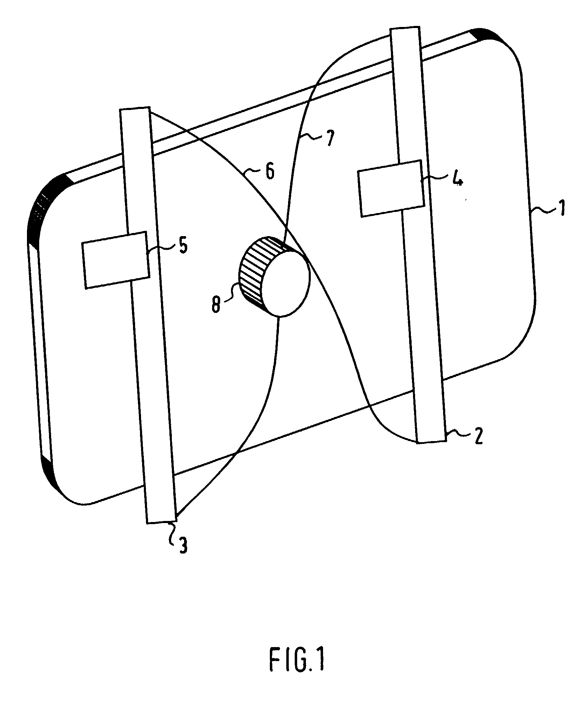

Das in Fig. 1 dargestellte Türmodul 1 trägt die wesentlichen Elemente des Fensterhebers, nämlich zwei Führungsschienen 2 und 3, an den Führungsschienen 2 und 3 gleitend verschiebbar geführte Mitnehmer 4 und 5, welche die Verbindung mit der (nicht dargestellten) Fensterscheibe herstellen, die Antriebselemente 6 und 7 für die Mitnehmer 4 und 5, den Elektromotor 8, der über die Antriebselemente 6 und 7 die Mitnehmer 4 und 5 auf den Führungsschienen 2 und 3 synchron und jeweils in gleicher Richtung verschiebt.

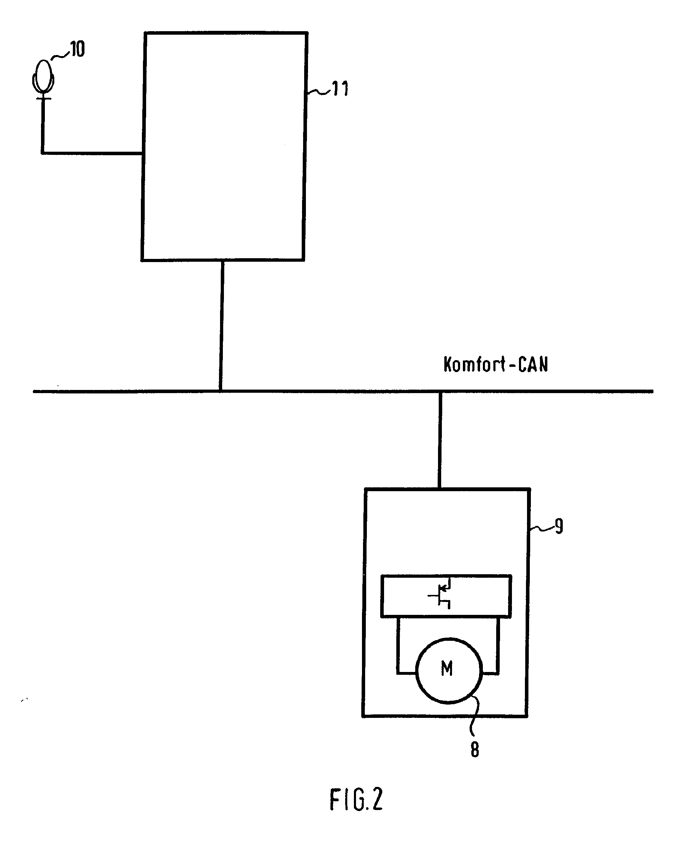

Wie aus Fig. 2 ersichtlich ist, werden die Geräusche im Fahrzeuginnenraum von dem Mikrofon 10 aufgenommen und als akustische Signale dem System 11 zur Auswertung akustischer Signale zugeführt. Das System 11 erkennt das Quietschgeräusch und erzeugt ein Befehlssignal, das der Fensterheber-Steuereinrichtung 9 mittels des Komfort-CAN zugeführt wird. Auf diese Weise erhält die Fensterheber-Steuereinrichtung 9, welche gerade das betreffende Fahrzeugfenster bewegt, die Information über das Quietschgeräusch.

Die Fensterheber-Steuereinrichtung 9, welche jetzt die Information besitzt, daß der zur Zeit von ihr angetriebene Fensterheber ein Quietschgeräusch verursacht, ergreift Maßnahmen zur Beseitigung des Quietschgeräuschs. Diese bestehen darin, daß bei Empfang des Befehlssignals damit begonnen wird, die Geschwindigkeit des Fensterhebers an dem betreffenden Fenster im Rahmen einer oberen und unteren maximalen Abweichung von der Sollgeschwindigkeit über die Motordrehzahl schrittweise zu verändern.

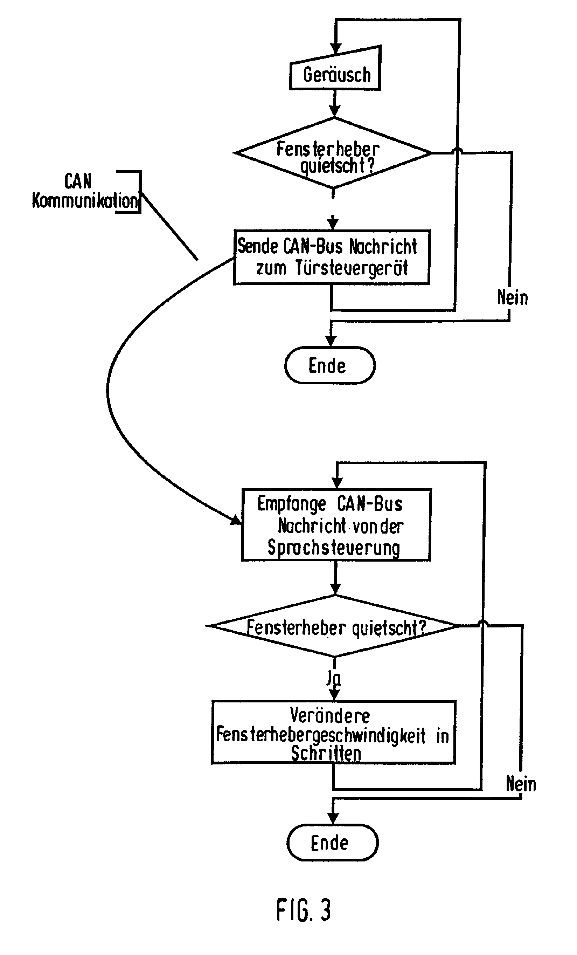

Wird zur Vereinfachung von maximal zwei Schritten ausgegangen, nämlich + 5 % und - 5 % der Sollgeschwindigkeit, bedeutet dieses, daß die Fensterheber-Steuereinrichtung 9 zunächst die Geschwindigkeit um + 5 % erhöht. Erlischt das Befehlssignal vom System 11 zur Auswertung akustischer Signale nicht, wird die Geschwindigkeit sequentiell auf - 5 %, + 10 % und - 10 % eingestellt. Sollte das Befehlssignal während dieser Veränderungen nicht erlöschen, wird wieder die Sollgeschwindigkeit angesteuert. Für den Fall jedoch, daß z.B. eine Veränderung von - 5 % erfolgreich ist, d.h. daß das Befehlssignal aufhört, wird dieser Wert zusammen mit der aktuellen Position des Fensterhebers gespeichert und bei folgenden Bewegungen des betreffenden Fensterhebers immer dann angesteuert, wenn das Fenster die entsprechende Position erreicht. Eine vereinfachte Darstellung der Vorgehensweise geht aus Fig. 3 hervor.

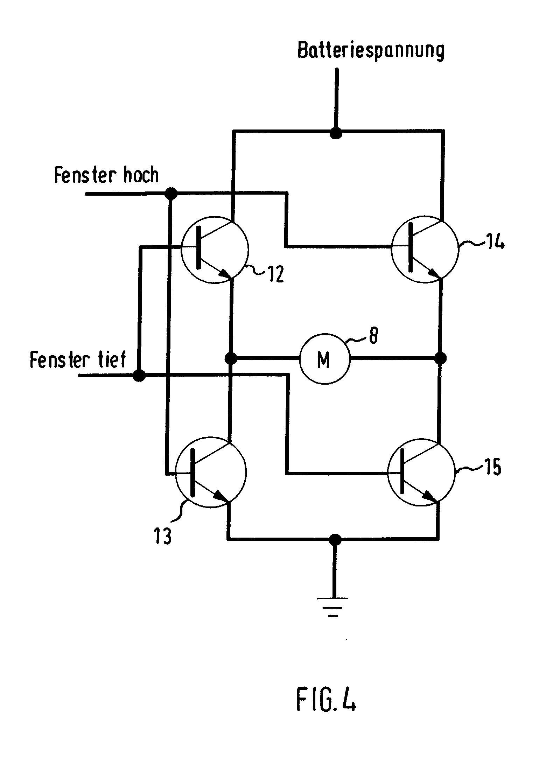

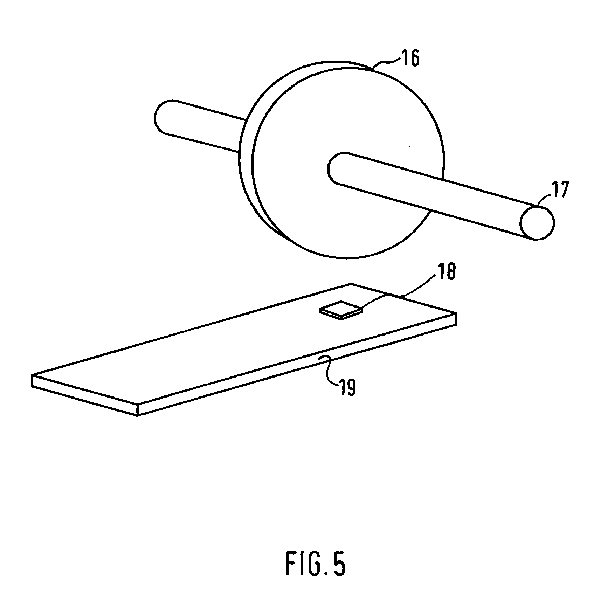

Um die Geschwindigkeit des Fensterhebers über die Fensterheber-Steuereinrichtung 9 zu kontrollieren und die Position des Fensterhebers bzw. des Fensters auszulesen, ist die Verwendung von Halbleiterschaltern 12 bis 15 zur Bestromung des Elektromotors 8 vorgesehen, wie aus Fig. 4 hervorgeht. Nur Halbleiterschalter ermöglichen es, die Drehzahl des Fensterhebermotors durch eine pulsweitenmodulierte Bestromung mit veränderbarem Ein-Ausschalt-Verhältnis zu justieren. Weiterhin ist vorgesehen, daß das Auslesen der Fensterheberposition mittels eines Magnetrings 16 auf der Motorwelle 17 und mittels eines Hall-Effekt-Sensors 18 auf der Elektronik erfolgt, wie schematisch in Fig. 5 dargestellt ist. Hierbei wird die Elektronik durch einen Leiterplattenfinger 19 repräsentiert.

### Bezugszeichenliste

- 1: Türmodul
- 2: Führungsschienen
- 3: Führungsschienen
- 4: Mitnehmer
- 5: Mitnehmer
- 6: Antriebselement
- 7: Antriebselement
- 8: Elektromotor
- 9: Fensterheber-Steuereinrichtung
- 10: Mikrofon
- 11: System zur Auswertung akustischer Signale

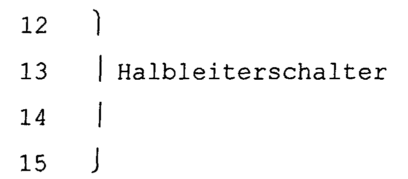

- 16: Magnetring
- 17: Motorwelle
- 18: Hall-Effekt-Sensor
- 19: Leiterplattenfinger

## Patentansprüche

1. Verfahren zur Beseitigung von Quietschgeräuschen, die im Betrieb eines durch einen Elektromotor (8) angetriebenen Fensterhebers für Kraftfahrzeugfenster auftreten, **dadurch gekennzeichnet, daß** die Quietschgeräusche von einem System (11) zur Auswertung akustischer Signale erfaßt werden, welches für die Dauer des Quietschgeräusches ein Befehlssignal erzeugt, das einer Fensterheber-Steuereinrichtung (9) zugeführt wird, welche die Drehzahl des Elektromotors (8) innerhalb festgelegter Grenzen ändert, bis das System zur Auswertung akustischer Signale kein Quietschgeräusch mehr erfaßt oder aber erkannt wird, daß Drehzahländerungen erfolglos sind.

2. Verfahren nach Anspruch 1, **dadurch gekennzeichnet, daß** ggf. ein im Kraftfahrzeug vorhandenes Sprachkontrollsystem als System zur Auswertung akustischer Signale verwendet wird.

3. Verfahren nach Anspruch 1 oder 2, **dadurch gekennzeichnet, daß** das Befehlssignal ggf. über das CAN (Controller Area Network)-System der Fensterheber-Steuereinrichtung (9) zugeführt wird.

4. Verfahren nach einem der Ansprüche 1 bis 3, **dadurch gekennzeichnet, daß** die Drehzahländerung durch Pulsweitenmodulations(PWM)-Signale erfolgt.

5. Verfahren nach Anspruch 4, **dadurch gekennzeichnet, daß** der Pulsweitenmodulationsstatus, der bei Aufhören des Quietschgeräusches vorliegt, und die dabei vorhandene Position des Fahrzeugfensters gespeichert werden, und daß dieser Pulsweitenmodulationsstatus jedesmal, wenn das Fahrzeugfenster diese Position durchfährt, zur entsprechenden Drehzahlsteuerung des Elektromotors (8) aus dem Speicher abgerufen wird.

6. Verfahren nach einem der Ansprüche 1 bis 5, **dadurch gekennzeichnet, daß** die Änderungen der Drehzahl des Elektromotors (8) innerhalb der festgelegten Grenzen schrittweise erfolgen.
